(19) **Europäisches Patentamt / European Patent Office / Office européen des brevets**

(11) **EP 3 750 102 B1**

(12) **FASCICULE DE BREVET EUROPEEN**

(45) Date de publication et mention de la délivrance du brevet:
**27.05.2026 Bulletin 2026/22**

(21) Numéro de dépôt: **19702933.3**

(22) Date de dépôt: **11.02.2019**

(51) Classification Internationale des Brevets (IPC):
**G06F 18/241** *(2023.01)* **G06V 10/772** *(2022.01)*

(52) Classification Coopérative des Brevets (CPC):
**G06V 10/772; G06F 18/2411;** G06V 2201/031

(86) Numéro de dépôt international:
**PCT/EP2019/053284**

(87) Numéro de publication internationale:
**WO 2019/155051 (15.08.2019 Gazette 2019/33)**

(54) **PROCEDE D'ESTIMATION PARAMETRIQUE D'UN OBJET A ESTIMER DANS UNE IMAGE NUMERIQUE, ET PROCEDE DE SUPPRESSION DE L'OBJET DANS L'IMAGE NUMERIQUE**

VERFAHREN ZUR SCHÄTZUNG VON PARAMETERN EINES IN EINEM DIGITALEN BILD ZU SCHÄTZENDEN OBJEKTS UND VERFAHREN ZUR ENTFERNUNG DES OBJEKTS AUS DEM DIGITALEN BILD

METHOD FOR ESTIMATING PARAMETERS OF AN OBJECT WHICH IS TO BE ESTIMATED IN A DIGITAL IMAGE, AND METHOD FOR REMOVING THE OBJECT FROM THE DIGITAL IMAGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.02.2018 FR 1851119**

(43) Date de publication de la demande:
**16.12.2020 Bulletin 2020/51**

(73) Titulaire: **Trixell**
**38430 Moirans (FR)**

(72) Inventeurs:
- **COTTE, Florian**
  **38430 Moirans (FR)**
- **VIGNOLLE, Jean-Michel**
  **38430 Moirans (FR)**

(74) Mandataire: **Atout PI Laplace**
**Immeuble Up On**
**25 Boulevard Romain Rolland**
**CS 40072**
**75685 Paris Cedex 14 (FR)**

(56) Documents cités:
WO-A1-2014/172421     US-A1- 2017 091 964
US-A1- 2017 154 413

- **CHEN YANG ET AL: "Artifact Suppressed Dictionary Learning for Low-Dose CT Image Processing", IEEE TRANSACTIONS ON MEDICAL IMAGING, IEEE SERVICE CENTER, PISCATAWAY, NJ, US, vol. 33, no. 12, 1 December 2014 (2014-12-01), pages 2271 - 2292, XP011565188, ISSN: 0278-0062, [retrieved on 20141125], DOI: 10.1109/TMI.2014.2336860**
- **YU XIAO ET AL: "Poisson noise removal via learned dictionary", 2010 17TH IEEE INTERNATIONAL CONFERENCE ON IMAGE PROCESSING (ICIP 2010); 26-29 SEPT. 2010; HONG KONG, CHINA, IEEE, PISCATAWAY, NJ, USA, 26 September 2010 (2010-09-26), pages 1177 - 1180, XP031813366, ISBN: 978-1-4244-7992-4**
- **QIONG XU ET AL: "Low-Dose X-ray CT Reconstruction via Dictionary Learning", IEEE TRANSACTIONS ON MEDICAL IMAGING, IEEE SERVICE CENTER, PISCATAWAY, NJ, US, vol. 31, no. 9, 1 September 2012 (2012-09-01), pages 1682 - 1697, XP011491138, ISSN: 0278-0062, DOI: 10.1109/TMI.2012.2195669**

EP 3 750 102 B1

**Description**

L'invention porte sur un procédé d'estimation paramétrique d'un objet à estimer dans une image numérique, et sur un procédé de suppression de l'objet dans l'image numérique. Elle s'applique notamment aux images numériques obtenues par imagerie à rayons X, mais peut être étendue à tout type d'imageur numérique, par exemple, à rayonnement infrarouge, ou encore dans le spectre visible.

Dans la présente demande, trois composantes peuvent être présentes dans l'image numérique :

1. Le contenu ou fond clinique, correspondant à l'objet réel imagé, que l'on cherche à visualiser. Il peut s'agir par exemple d'un patient, ou d'une zone d'un patient, en imagerie à rayons X.
2. Le bruit d'acquisition, correspondant aux perturbations aléatoires de la formation des images. Il peut s'agir du bruit électronique, auquel il faut ajouter, en imagerie à rayons X, le bruit photonique, dû au faible nombre de photons présents dans l'image et qui suit une statistique de Poisson.
3. Les objets que l'on cherche à estimer, et qui peuvent s'avérer gênants pour la visualisation du contenu.

L'image numérique peut alors s'écrire de deux manières différentes selon que le bruit est traité indépendamment des deux autres composantes :

$$Image = Objet + Contenu + bruit$$

Ou considéré comme appartenant au contenu :

$$Image = Objet + Contenu$$

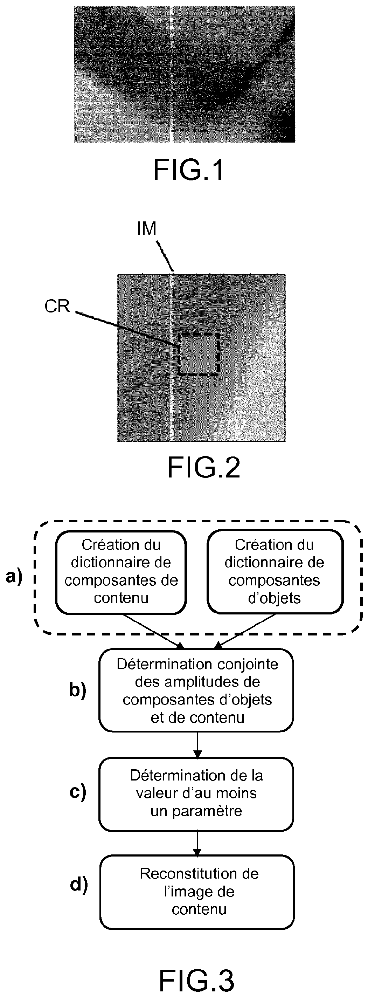

La figure 1 représente un exemple d'image comprenant un objet à estimer. En l'occurrence, cette figure représente une image radiologique dont le contenu est une zone d'un patient. Afin d'améliorer le contraste de l'image, et plus généralement la qualité de l'image radiologique, il est courant pour le praticien d'utiliser une grille antidiffusante. Située entre le patient et le détecteur, elle permet de diminuer la contribution du rayonnement diffusé et causé par le patient. Sur la figure 1, les variations horizontales sont ainsi dues à la présence de la grille antidiffusante ; ces variations peuvent masquer une information importante, et conduire éventuellement à un mauvais diagnostic. Un traitement d'image doit donc être appliqué, afin de retirer ces variations horizontales de l'image numérique, sans toutefois modifier le contenu.

Un tel traitement comporte toutefois deux principales difficultés. Il faut tout d'abord pouvoir enlever uniquement l'objet sachant que l'image contient également du bruit, et que le contenu peut être un signal très fort et imprévisible. En effet, le contenu peut fortement varier selon la zone du patient à imager, et pour une même zone, le contenu peut varier d'un patient à l'autre. L'autre difficulté provient du fait que l'objet à estimer n'est pas parfaitement défini, à savoir que plusieurs paramètres de l'objet peuvent ne pas être connus. La figure 2 représente un autre exemple d'objet à estimer. Il s'agit d'un carré CR superposé à l'image IM, qui gêne la visualisation correcte du contenu. Ni l'amplitude de l'objet (la valeur du pixel, par exemple le niveau de gris pour une image de radiologie), ni sa taille de l'objet ne sont connues.

Actuellement, deux types de solutions permettent de traiter un signal afin d'en retirer des composantes non désirées.

Le premier regroupe les filtres classiques, notamment le filtre adapté, le filtre de Wiener ou encore le filtre de Kalman. Ces solutions se fondent sur une estimation et sur une modélisation statistique du contenu et du signal gênant l'estimation du contenu (du bruit généralement aléatoire, décorrélé du contenu). Dans notre cas, le contenu (le patient) n'est pas modélisable et il représente pourtant la majorité du signal présent dans l'image. De telles solutions peuvent donc être implémentées dans des zones dites « plates » de l'image où le patient n'est pas présent, mais demeurent sous-optimales lorsque le patient est présent. Ces solutions ont de plus l'inconvénient de modifier plus ou moins fortement le contenu de l'image lors de la suppression de l'objet, par exemple si l'image comprend une composante qui ressemble à l'objet à supprimer. En référence à la figure 1, s'il y a, dans le contenu acquis par le détecteur, un élément ressemblant à la grille antidiffusante, cet élément sera potentiellement supprimé en cas de filtrage adapté.

Le deuxième type de solutions regroupe les méthodes d'estimation spectrale, notamment la méthode IAA (Iterative Adaptive Approach), décrite notamment dans l'article « Source localization and sensing: A nonparametric Iterative Adaptive Approach based on weighted least squares » (Yardibi T. et al., Aerospace and Electronic Systems, IEEE Transactions on 46.1 2010), et la méthode SLIM (Sparse Learning via Iterative Minimization), décrite notamment dans l'article « Sparse Learning via Iterative Minimization with application to MIMO Radar Imaging » (Tan X. et al., IEEE Transactions on Signal Processing, vol. 59, no. 3, March 2011). Ces méthodes sont adaptées au domaine des radars et des télécommunications, pour lesquels le signal est unidimensionnel, mais ne peuvent en l'état pas être transposées au cas d'un signal bidimensionnel, et être ainsi utilisées pour du traitement d'image. Par ailleurs, dans la méthode SLIM, le bruit est supposé être blanc. Ce postulat ne peut être utilisé pour une image acquise par un détecteur, où le bruit est propre à chaque technique d'imagerie. En particulier, en imagerie à rayons X, le bruit photonique n'est pas blanc.

Enfin, les méthodes précitées ne considèrent que deux signaux, à savoir le contenu et le bruit. Elles ne permettent donc pas d'effectuer une estimation paramétrique d'un objet gênant la visualisation du contenu, et distinct du bruit d'acquisition.

Le document « Artifact Suppressed Dictionary Learning for Low-Dose CT Image Processing », (Chen Yang et al.) décrit un procédé de suppression d'artefacts présents dans une image de tomodensitométrie.

L'invention vise donc à obtenir un procédé d'estimation paramétrique d'un objet à estimer dans une image numérique, distinct du bruit d'acquisition, ne nécessitant de connaissance exacte préalable ni du contenu, ni de l'objet à estimer, ni du bruit d'acquisition. L'invention vise également un procédé de suppression de l'objet dans l'image numérique, qui ne modifie pas, dans l'image, le contenu correspondant à l'objet réel imagé.

Un objet de l'invention est donc un procédé d'estimation paramétrique tel que défini dans les revendications 1 à 12.

L'invention se rapporte également à un procédé de suppression tel que défini dans la revendication 13.

D'autres caractéristiques, détails et avantages de l'invention ressortiront à la lecture de la description faite en référence aux dessins annexés donnés à titre d'exemple et qui représentent, respectivement :

- la figure 1, déjà décrite, un exemple d'oscillation présente dans une image à rayons X, due à la présence d'une grille antidiffusante ;
- la figure 2, un exemple d'objet à estimer dans une image numérique ;
- la figure 3, un schéma fonctionnel du procédé selon l'invention ;
- la figure 4A, un exemple de dictionnaire de composantes de contenu, obtenu à partir de composantes de Fourier ;
- la figure 4B, un autre exemple de dictionnaire de composantes de contenu, obtenu à partir de la réponse impulsionnelle du détecteur ;
- la figure 5, un exemple de dictionnaire de composantes d'objet, pour lequel le paramètre à estimer est la taille d'un carré ;
- la figure 6, une illustration schématique des différentes étapes de l'algorithme de détermination conjointe des amplitudes de composantes d'objet et de contenu, selon un premier mode de réalisation ;
- la figure 7, une illustration schématique des différentes étapes de l'algorithme de détermination conjointe des amplitudes de composantes d'objet et de contenu, selon un deuxième mode de réalisation ;
- la figure 8, un graphe illustrant l'amplitude de chaque composante d'objet ;
- la figure 9, l'image de la figure 2, dans laquelle l'objet a été retiré.

La figure 2 illustre une image numérique IM, comprenant un objet (un carré CR) qui blanchit une partie correspondante de l'image numérique. Sur la figure 2, les pointillés entourant le carré CR ne sont représentés que pour des raisons de clarté de la figure. On cherche donc à estimer la valeur d'au moins un paramètre caractérisant l'objet, et l'amplitude de l'objet, pour estimer de combien le carré CR éclaircit l'image.

La figure 3 illustre un schéma fonctionnel du procédé selon l'invention.

La première étape initiale a) consiste à créer un dictionnaire de composantes de contenu et à créer un dictionnaire de composantes d'objet.

Une première sous-étape consiste donc à créer un dictionnaire de composantes de contenu.

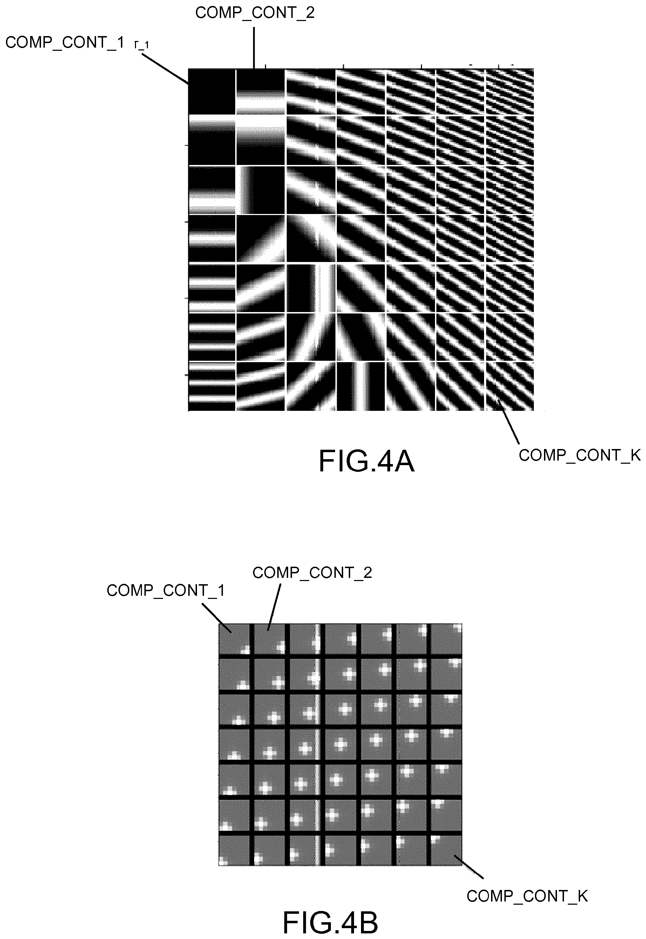

Selon un premier mode de réalisation, le dictionnaire de composantes de contenu peut être créé sans a priori, en générant un ensemble d'images de signaux sinusoïdaux bidimensionnels basiques. La figure 4A illustre un tel dictionnaire. Chacune des composantes de contenu (COMP_CONT_1, COMP_CONT_2, ..., COMP_CONT_K) (K supérieur ou égal à 1) représente un signal sinusoïdal bidimensionnel, à savoir à une fréquence particulière. Les composantes de contenu représentées sont appelées composantes de Fourier. Le nombre de composantes de contenu représenté sur la figure 4 n'est pas limitatif.

Selon un autre mode de réalisation, le dictionnaire de composantes de contenu peut être créé en générant un ensemble d'images représentatives de la fonction de transfert de modulation du capteur formant l'image numérique. La figure 4B illustre un tel dictionnaire. Ce dictionnaire est généré à partir de la réponse impulsionnelle du détecteur. Chacune des composantes (COMP_CONT_1, COMP_CONT_2, ..., COMP_CONT_K) (K supérieur ou égal à 1) représente la réponse impulsionnelle du détecteur sur un pixel. Le dictionnaire de contenu est donc constitué de l'ensemble de ces images, pour chacun des pixels du détecteur. Ce dictionnaire est avantageusement proche des caractéristiques physiques du détecteur, notamment en imagerie à rayons X.

Selon un autre mode de réalisation, le dictionnaire de composantes de contenu peut être créé à partir d'un algorithme d'apprentissage automatique (« machine learning » en terminologie anglo-saxonne), notamment à partir de l'algorithme K-SVD. L'algorithme K-SVD est particulièrement adapté à la création et à l'apprentissage de composantes de dictionnaire, ce qui le rend facilement implémentable. Le dictionnaire de composantes de contenu utilisant un tel algorithme peut par exemple créer les composantes à partir d'une banque d'images de radiographies à rayons X. D'autres algorithmes d'apprentissage automatique, par exemple les réseaux de neurones, ou encore l'algorithme SVM (pour « Support Vector Machine », ou « machine à vecteurs de support »).

Les dimensions de chaque composante de contenu peuvent être les mêmes que les dimensions de l'image numérique dans laquelle se trouve l'objet. L'estimation paramétrique peut également être réalisée sur une partie de l'image numérique, par exemple si l'objet est très localisé. Dans ce cas, les dimensions de chaque composante de contenu sont les mêmes que les dimensions de la partie de l'image numérique.

Une deuxième sous-étape de la première étape initiale a) consiste à créer un dictionnaire de composantes d'objet. Le dictionnaire de composantes d'objet peut être créé en générant un ensemble d'images ayant chacune une valeur différente du paramètre. Le paramètre peut être, de façon non exhaustive, la fréquence, la forme, la taille et l'emplacement de l'objet.

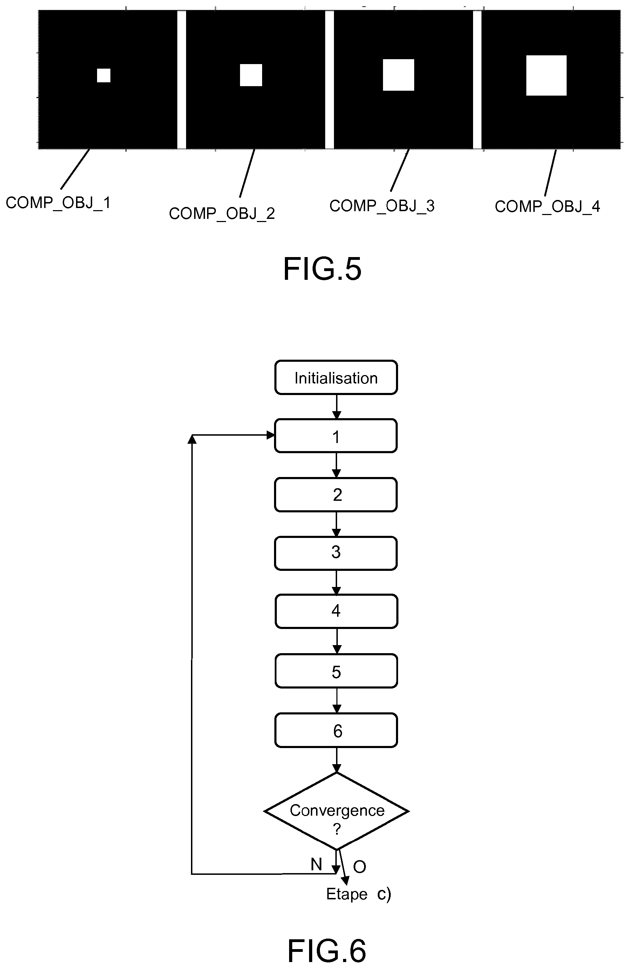

La figure 5 un illustre un exemple de dictionnaire de composantes d'objet, pour lequel le paramètre à estimer est la taille du carré à estimer dans la figure 2. Le nombre de composantes d'objets (COMP_OBJ_1, COMP_OBJ_2, COMP_OBJ_3, COMP_OBJ_4) présentes dans la figure 5, à savoir le nombre de valeurs possibles que peut prendre le paramètre à estimer, n'est pas limitatif. Il peut notamment comprendre autant de composantes qu'il y a de tailles différentes de carrés sur l'image numérique (par exemple 1x1 pixel, 2x2 pixels, 3x3 pixels, etc.).

Le cas le plus fréquent est celui où il y a un paramètre à estimer (par exemple la taille du carré), et l'amplitude de l'objet correspondant. Ainsi, le dictionnaire de composantes d'objet comprend autant de composantes d'objet qu'il y a de valeurs possibles du paramètre. La composante d'objet ayant la plus forte amplitude correspond à la bonne valeur de paramètre. Il est également possible d'envisager le cas où il y a plusieurs paramètres à estimer (par exemple l'emplacement, la taille du carré), en plus de l'amplitude de l'objet correspondant. Si l'objet est une somme de composantes connues mais d'amplitudes inconnues, il convient alors d'estimer les amplitudes de chacune des composantes.

On dispose ainsi d'un dictionnaire de composantes de contenu, et d'un dictionnaire de composantes d'objet. Chaque composante est une matrice de I lignes et J colonnes que l'on écrira sous la forme d'un vecteur de taille M, M étant la taille de l'image, ou de la partie de l'image dans laquelle se trouve l'objet (i.e. l'ensemble des pixels correspondants).

La détermination conjointe de l'amplitude de chacune des composantes de contenu du dictionnaire de composantes de contenu et des composantes d'objet du dictionnaire de composantes d'objet présentes dans l'image numérique (étape b) dans la figure 3) peut être effectuée conformément aux deux modes de réalisation décrits ci-après.

*1$^{er}$ mode de réalisation*

Le bruit présent dans l'image numérique est traité séparément du contenu et de l'objet. Ce traitement séparé peut être justifié par la nature différente des données traitées : les données du contenu et de l'objet ne sont pas aléatoires, alors que celles du bruit le sont.

Soit D une matrice de taille MxL contenant les différentes composantes à estimer (objet et contenu). La matrice D est donc une concaténation du dictionnaire de composantes de contenu et du dictionnaire de composantes d'objet. L est le nombre de composantes du dictionnaire de composantes de contenu et du dictionnaire de composantes d'objet. $D^i$, qui est un vecteur de taille M, est la i$^{ème}$ composante de la matrice D.

Les informations de corrélation du bruit présent dans l'image numérique se retrouvent dans une matrice N, distincte de la matrice D. Le bruit présent dans l'image numérique est donc traité séparément du contenu et de l'objet. La matrice N de corrélation du bruit peut être déterminée par une connaissance a priori du détecteur d'acquisition de l'image numérique. Le bruit peut en effet être propre à chaque technique d'imagerie (rayons X, infrarouges, visible). En particulier, en imagerie à rayons X, le bruit photonique n'est généralement pas un bruit blanc. La matrice N de corrélation du bruit peut être estimée d'après le théorème de Wiener-Khintchine, en prenant la transformée de Fourier inverse de la densité spectrale de puissance d'une image « plate », à savoir sans contenu.

En variante, si on suppose qu'il n'y a aucune corrélation entre les pixels, N peut être une matrice identité de taille MxM.

Soit **y** un vecteur représentant l'image numérique, à savoir la valeur (également appelée luminosité) de chaque pixel.

Soit β un vecteur d'estimation de taille L contenant les amplitudes estimées de chaque composante $D^i$. Ainsi, β = [$β_1$, $β_2$, ..., $β_L$]

Soient a,b et q des paramètres de l'algorithme, a et b dépendent de la nature et de la connaissance du bruit. S'il n'y a pas de connaissance particulière sur le bruit, alors a=0 et b=0.

L'algorithme de détermination conjointe de l'amplitude de chacune des composantes de contenu du dictionnaire de composantes de contenu et des composantes d'objet du dictionnaire de composantes d'objet présentes dans l'image numérique comprend une étape d'initialisation, et six étapes d'itération, comme l'illustre la figure 6.

Etape d'initialisation

La valeur du vecteur d'estimation β peut être initialisée d'une manière quelconque (par exemple avec des valeurs aléatoire), ou bien en effectuant le produit scalaire entre chaque composante $\mathbf{D^i}$ et le vecteur y représentant l'image numérique :

$$\beta_i = \boldsymbol{D^i}.\boldsymbol{y}, \text{ pour } 1 \le i \le L$$

Par ailleurs, une estimation de la variance de bruit ($\sigma^2$) est initialisée, soit d'une manière quelconque (par exemple avec des valeurs aléatoire), soit avec la relation suivante :

$$\sigma^2 = \frac{[\mathbf{y} - D\boldsymbol{\beta}]^H N^{-1}[\mathbf{y} - D\boldsymbol{\beta}] + a}{M + b}$$

β étant à sa valeur initiale.

Etapes d'itération

1. On calcule $P = |\beta|^q Z$ , où q est un paramètre fixé par l'utilisateur ; il s'agit d'un réel compris entre 1 et 2. L'utilisateur peut changer la valeur de ce paramètre, en fonction du résultat final, à savoir en fonction de la qualité de la suppression de l'objet dans l'image. Z est une matrice diagonale permettant de privilégier l'estimation de certaines composantes, dans le cas général Z sera la matrice identité. Z est paramétrable par l'utilisateur.

2. On calcule une matrice R d'estimation de la matrice de covariance du signal **y** de l'image numérique :

$$R = D\mathrm{diag}(P)D^H + \sigma^2 N$$

3. On calcule un terme de normalisation :

$$\mathrm{Nor} = |\beta_i|^{-q}$$

4. On calcule ensuite chaque amplitude estimée de composante $\beta_i$ par la formule :

$$\beta_i = \frac{D^{i^H} R^{-1} \mathbf{y}}{\mathrm{Nor}}$$

5. L'estimation de la variance de bruit $\sigma^2$ est calculée par la formule suivante :

$$\sigma^2 = \frac{[\mathbf{y} - D\boldsymbol{\beta}]^H N^{-1}[\mathbf{y} - D\boldsymbol{\beta}] + a}{M + b}$$

6. De façon facultative, les composantes de dictionnaire peuvent être modifiées pour minimiser une erreur de projection ε définie par :

$$\varepsilon = |\mathbf{y} - D\boldsymbol{\beta}|^2$$

Chaque composante $\mathbf{D^i}$ de dictionnaire peut notamment être mise à jour avec un paramètre de mise à jour $\lambda$ compris entre 0 et 1 :

$$\mathbf{D^i_{new}} = (1 - \lambda)\mathbf{D^i_{old}} + \lambda\left[\frac{\boldsymbol{y} - D\boldsymbol{\beta} + \mathbf{D^i_{old}}\beta_i}{\beta_i}\right]$$

Où $\mathbf{D^i_{old}}$ est la composante **D**<sup>i</sup> de dictionnaire à mettre à jour, et $\mathbf{D^i_{new}}$, la composante **D**<sup>i</sup> de dictionnaire mise à jour. Le paramètre de mise à jour $\lambda$ peut être fixé à 0, il n'y a dans ce cas pas de mise à jour des composantes du dictionnaire.

La mise à jour des composantes **D**<sup>i</sup> de dictionnaire peut être réalisée par d'autres méthodes, notamment par dichotomie, ou par descente de gradient.

Cette étape de mise à jour peut s'appliquer aux composantes de contenu du dictionnaire de composantes de contenu et/ou aux composantes d'objet du dictionnaire de composantes d'objet.

Ces six étapes sont répétées jusqu'à convergence de l'algorithme, à savoir lorsque le vecteur d'estimation β et l'estimation de la variance de bruit $\sigma^2$ convergent. La variance de bruit $\sigma^2$ étant directement dépendante de β, la convergence de l'un implique la convergence de l'autre.

La convergence du vecteur d'estimation β et la convergence de l'estimation de la variance de bruit $\sigma^2$ peuvent être considérées atteintes respectivement lorsque la norme du vecteur d'estimation β évolue en-dessous d'un seuil prédéterminé entre deux itérations successives, et lorsque la valeur de l'estimation de la variance de bruit $\sigma^2$ évolue en-dessous d'un seuil prédéterminé entre deux itérations successives.

En variante, la convergence peut être considérée atteinte au bout d'un nombre prédéterminé d'itérations. Il est alors possible de déterminer la valeur du ou des paramètres de l'objet (étape c) dans la figure 3). L'étape c) comprend les sous-étapes de :

- détermination d'un sous-ensemble de composantes d'objet de plus forte amplitude ;
- combinaison linéaire des composantes d'objet dudit sous-ensemble.

Le sous-ensemble de composantes d'objet de plus forte amplitude peut notamment comprendre une seule composante.

A partir de l'algorithme décrit ci-dessus, il est également possible de reconstituer le contenu, correspondant au contenu réel imagé (étape d) dans la figure 3), en effectuant une combinaison linéaire de toutes les composantes de contenu. Cette reconstitution permet d'obtenir une image sans bruit.

### 2<sup>ème</sup> _mode de réalisation_

Selon ce deuxième mode de réalisation non revendiqué, le bruit présent dans l'image numérique est traité avec le contenu et l'objet, à savoir dans une seule et même matrice.

Par rapport au premier mode de réalisation, la matrice D est donc le résultat de la concaténation du dictionnaire de composantes d'objet, du dictionnaire de composantes de contenu, et des informations de corrélation du bruit présent dans l'image numérique (qui constituent la matrice N dans le premier mode de réalisation).

**y** est le vecteur représentant l'image numérique, à savoir la valeur de chaque pixel.

β est le vecteur d'estimation de taille L contenant les amplitudes estimées de chaque composante **D**<sup>i</sup>. Ainsi, β = $[\beta_1, \beta_2, ..., \beta_L]$

q est un paramètre de l'algorithme. Par rapport au premier mode de réalisation, il n'y a pas de calcul de l'estimation de la variance de bruit $\sigma^2$ ; les paramètres a et b ne sont donc pas utilisés.

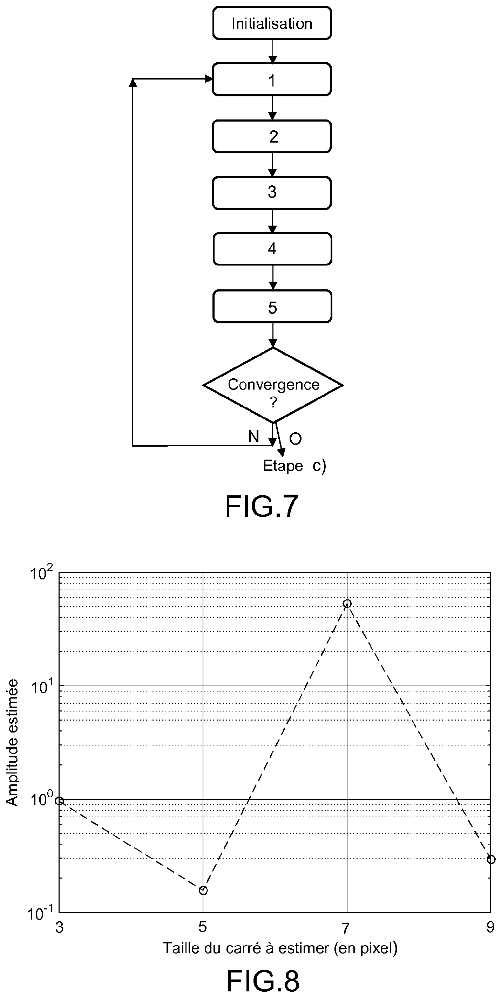

L'algorithme de détermination conjointe comprend également une étape d'initialisation, et cinq étapes d'itération, comme l'illustre la figure 7.

### Etape d'initialisation

La valeur du vecteur d'estimation β peut être initialisée d'une manière quelconque (par exemple avec des valeurs aléatoire), ou bien en effectuant le produit scalaire entre chaque composante **D**<sup>i</sup> et le vecteur **y** représentant l'image numérique :

$$\beta_i = \boldsymbol{D^i}.\boldsymbol{y}, \text{ pour } 1 \leq i \leq L$$

### Etapes d'itération

1. On calcule $P = |\beta|^q Z$ , où q est un paramètre fixé par l'utilisateur ; il s'agit d'un réel compris entre 1 et 2. L'utilisateur peut changer la valeur de ce paramètre, en fonction du résultat final, à savoir en fonction de la qualité de la suppression de l'objet dans l'image. Z est une matrice diagonale permettant de privilégier l'estimation de certaines composantes, dans le cas général Z sera la matrice identité. Z est paramétrable par l'utilisateur.

2. On calcule une matrice R d'estimation de la matrice de covariance du signal **y** de l'image numérique :

$$R = D\,\mathrm{diag}(P)D^H$$

3. On calcule un terme de normalisation :

$$\mathrm{Nor} = D^{i^H}R^{-1}D^i$$

4. On calcule ensuite chaque amplitude estimée de composante $\beta_i$ par la formule :

$$\beta_i = \frac{D^{i^H}R^{-1}\mathbf{y}}{\mathrm{Nor}}$$

5. De façon facultative, les composantes du dictionnaire peuvent être modifiées pour minimiser une erreur de projection $\varepsilon$, de la même manière que pour le premier mode de réalisation.

Ces cinq étapes sont répétées jusqu'à convergence de l'algorithme, à savoir lorsque le vecteur d'estimation β converge.

La convergence du vecteur d'estimation β peut être considérée atteinte lorsque la norme du vecteur d'estimation β évolue en-dessous d'un seuil prédéterminé entre deux itérations successives.

En variante, la convergence peut être considérée atteinte au bout d'un nombre prédéterminé d'itérations. Les étapes c) et d) sont les mêmes que pour le premier mode de réalisation.

### 3$^{ieme}$ mode de réalisation

Selon ce troisième mode de réalisation non revendiqué, le bruit, le contenu et l'objet sont traités de manière séparés. Ce traitement séparé peut être justifié par la nature différente des données traitées : le bruit est aléatoire, le contenu est modélisé par un dictionnaire de composantes de contenu et l'objet est modélisé par un dictionnaire de composantes paramétriques d'objet.

Soit Dc une matrice de taille MxLc contenant les différentes composantes à estimer du contenu. Soit Ds(μ) une matrice paramétrique de taille MxLs contenant les différentes composantes à estimer de l'objet. Le vecteur μ est un paramètre sélectionné dans un ensemble comprenant de manière non-exhaustive la fréquence, la forme, la taille et l'emplacement de l'objet. Lc est le nombre de composantes du dictionnaire de composantes de contenu et Ls le nombre de composantes du dictionnaire de composantes d'objet. **Dc$^i$**, qui est un vecteur de taille M, est la i$^{\text{ème}}$ composante de la matrice Dc, et **Ds$^i$(μ)**, qui est un vecteur de taille M, est la i$^{\text{ème}}$ composante de la matrice Ds(μ).

Soit D la matrice résultante de la concaténation du dictionnaire de composantes d'objet Ds(μ) et du dictionnaire de composantes de contenu Dc.

Les informations de corrélation du bruit présent dans l'image numérique se retrouvent dans une matrice N, distincte des matrices Dc et Ds(μ). Le bruit présent dans l'image numérique est donc traité séparément du contenu et de l'objet. La matrice N de corrélation du bruit peut être déterminée par une connaissance a priori du détecteur d'acquisition de l'image numérique. Le bruit peut en effet être propre à chaque technique d'imagerie (rayons X, infrarouges, visible). En particulier, en imagerie à rayons X, le bruit photonique n'est généralement pas un bruit blanc. La matrice N de corrélation du bruit peut être estimée d'après le théorème de Wiener-Khintchine, en prenant la transformée de Fourier inverse de la densité spectrale de puissance d'une image « plate », à savoir sans contenu.

En variante, si on suppose qu'il n'y a aucune corrélation entre les pixels, N peut être une matrice identité de taille MxM.

Soit **y** un vecteur représentant l'image numérique, à savoir la valeur (également appelée luminosité) de chaque pixel.

Soit β**c** un vecteur d'estimation de contenu, de taille Lc, contenant les amplitudes estimées de chaque composante du contenu **Dc$^i$**. Ainsi, β**c** = [βc$_1$, βc$_2$, ..., βc$_{Lc}$]

Soit β**s** un vecteur d'estimation d'objet, de taille Lc, contenant les amplitudes estimées de chaque composante d'objet **Ds$^i$(μ)**. Ainsi, β**s** = [βs$_1$, βs$_2$, ..., βs$_{Ls}$]

Soit β le vecteur résultant de la concaténation du vecteur contenant les amplitudes des composantes d'objet β**s** et du vecteur contenant les amplitudes des composantes de contenu β**c**.

Soient a, b et q des paramètres de l'algorithme, a et b dépendent de la nature et de la connaissance du bruit. S'il n'y a pas de connaissance particulière sur le bruit, alors a=0 et b=0.

L'algorithme de détermination conjointe de l'amplitude de chacune des composantes de contenu du dictionnaire de composantes de contenu et des composantes d'objet du dictionnaire de composantes d'objet présentes dans l'image numérique comprend une étape d'initialisation, et six étapes d'itération, comme l'illustre la figure 6.

Etape d'initialisation

Les valeurs des vecteurs d'estimation de contenu β**c** peuvent être initialisées d'une manière quelconque (par exemple avec des valeurs aléatoire), ou bien en effectuant le produit scalaire entre chaque composante **Dc**$^i$ et le vecteur **y** représentant l'image numérique :

$$\beta c_i = \boldsymbol{Dc^i}.\boldsymbol{y}, \text{ pour } 1 \leq i \leq Lc$$

Les valeurs des vecteurs d'estimation d'objet β**s** peuvent être initialisées d'une manière quelconque (par exemple avec des valeurs aléatoire), ou bien en effectuant le produit scalaire entre chaque composante **Ds**$^i$ et le vecteur **y** représentant l'image numérique :

$$\beta s_i = \boldsymbol{Ds^i}(\mu).\boldsymbol{y}, \text{ pour } 1 \leq i \leq Ls$$

Par ailleurs, une estimation de la variance de bruit ($\sigma^2$) est initialisée, soit d'une manière quelconque (par exemple avec des valeurs aléatoire), soit avec la relation suivante :

$$\sigma^2 = \frac{[\boldsymbol{y} - Dc\boldsymbol{\beta c} - Ds(\mu)\boldsymbol{\beta s}]^H N^{-1} [\boldsymbol{y} - Dc\boldsymbol{\beta c} - Ds(\mu)\boldsymbol{\beta s}] + a}{M + b}$$

β**c** et β**s** étant à leur valeur initiale.

Etapes d'itération

1. On calcule P = |β|$^q$Z , où q est un paramètre fixé par l'utilisateur ; il s'agit d'un réel compris entre 1 et 2. L'utilisateur peut changer la valeur de ce paramètre, en fonction du résultat final, à savoir en fonction de la qualité de la suppression de l'objet dans l'image. Z est une matrice diagonale permettant de privilégier l'estimation de certaines composantes, dans le cas général Z sera la matrice identité. Z est paramétrable par l'utilisateur.

2. On calcule une matrice R d'estimation de la matrice de covariance du signal y de l'image numérique :

$$R = D\text{diag}(P)D^H + \sigma^2 N$$

3. On calcule un terme de normalisation :

$$Nor = |\beta_i|^{-q}$$

4. On calcule ensuite chaque amplitude estimée de composante $\beta_i$ par la formule :

$$\beta_i = \frac{D^{i^H} R^{-1} \boldsymbol{y}}{Nor}$$

5. L'estimation de la variance de bruit $\sigma^2$ peut être calculée par exemple par la formule suivante :

8

$$\sigma^2 = \frac{[\mathbf{y} - Dc\boldsymbol{\beta c} - Ds(\mu)\boldsymbol{\beta s}]^H N^{-1}[\mathbf{y} - Dc\boldsymbol{\beta c} - Ds(\mu)\boldsymbol{\beta s}] + a}{M + b}$$

6. De façon facultative, les composantes de dictionnaire d'objet peuvent être modifiées pour minimiser une erreur de projection ε définie par :

$$\varepsilon = |\mathbf{y} - Dc\boldsymbol{\beta c} - Ds(\mu)\boldsymbol{\beta s}|^2$$

Chaque composante $\mathbf{D^i}$ de dictionnaire peut notamment être mise à jour à partir d'une nouvelle valeur du paramètre $\mu$ par un procédé de descente de gradient. Pour cela on appelle J le Jacobien de la fonction $|\mathbf{y} - Dc\boldsymbol{\beta c} - Ds(\mu)\beta\mathbf{s}|$ par rapport à $\mu$:

$$J = \frac{\partial|\mathbf{y} - Dc\boldsymbol{\beta c} - Ds(\mu)\boldsymbol{\beta s}|}{\partial\mu}$$

La nouvelle valeur du paramètre $\mu$ est alors donnée par

$$\mu_{new} = \mu_{old} + [J^T \times J]^{-1} \times J^T \times |\mathbf{y} - Dc\boldsymbol{\beta c} - Ds(\mu)\boldsymbol{\beta s}|$$

Ces six étapes sont répétées jusqu'à convergence de l'algorithme, à savoir lorsque le vecteur d'estimation β et l'estimation de la variance de bruit $\sigma^2$ convergent. La variance de bruit $\sigma^2$ étant directement dépendante de β, la convergence de l'un implique la convergence de l'autre.

La convergence du vecteur d'estimation β et la convergence de l'estimation de la variance de bruit $\sigma^2$ peuvent être considérées atteintes respectivement lorsque la norme du vecteur d'estimation β évolue en-dessous d'un seuil prédéterminé entre deux itérations successives, et lorsque la valeur de l'estimation de la variance de bruit $\sigma^2$ évolue en-dessous d'un seuil prédéterminé entre deux itérations successives.

En variante, la convergence peut être considérée atteinte au bout d'un nombre prédéterminé d'itérations. Il est alors possible de déterminer la valeur du ou des paramètres de l'objet (étape c) dans la figure 3). L'étape c) comprend les sous-étapes de :

- Détermination de la valeur de $\mu$

A partir de l'algorithme décrit ci-dessus, il est également possible de reconstituer le contenu, correspondant au contenu réel imagé (étape d) dans la figure 3), en effectuant une combinaison linéaire de toutes les composantes de contenu. Cette reconstitution permet d'obtenir une image sans bruit.

L'invention se rapporte aussi à un procédé de suppression d'un objet présent dans une image numérique représentant un contenu réel imagé, comprenant les étapes de :

- estimation de la valeur d'au moins un paramètre de l'objet et de son amplitude conformément au procédé d'estimation paramétrique précité ;
- détermination de l'objet à partir du paramètre de l'objet et de son amplitude ;
- soustraction pixel par pixel de l'objet dans l'image numérique.

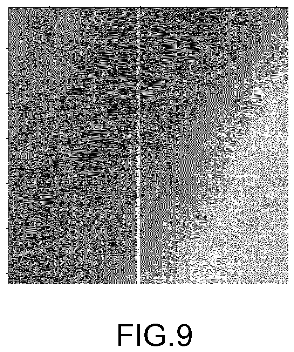

En utilisant le premier mode de réalisation de l'algorithme, il est possible d'obtenir une estimation de la taille et de l'amplitude du carré. La figure 8 représente le résultat de l'exécution de l'algorithme. La valeur de paramètre de chaque composante du dictionnaire d'objet se trouve en abscisse, et l'amplitude estimée de chacune de ces composantes en ordonnée (en échelle logarithmique). Il ressort de cette figure que l'algorithme a détecté un carré de taille 7 avec une forte amplitude. Ainsi, le carré situé à la figure 2 est de largeur 7 et a pour amplitude 52. En utilisant ces informations, il est alors possible de corriger l'image de sorte à obtenir une correction parfaite, comme l'illustre la figure 9.

La méthode a été décrite pour la totalité d'une image formée par le détecteur. Elle peut également être appliquée à une partie de l'image formée par le détecteur, en adaptant les dimensions des matrices et des vecteurs nécessaires à l'estimation paramétrique.

La méthode a été décrite dans le cas d'un objet additif :

$$Image = Objet + Contenu$$

Elle peut être appliquée au cas d'un objet multiplicatif:

$$Image = Objet \times Contenu$$

Par exemple, la grille antidiffusante est un objet multiplicatif, la valeur de la fréquence et son amplitude dépendent alors du patient. Pour passer du cas additif au cas multiplicatif, il suffit de calculer le logarithme de l'image (donc du vecteur y) :

$$(Image) = \log(Objet) + \log(Contenu)$$

En utilisant la méthode additive décrite précédemment pour obtenir le vecteur d'estimation β, il est possible d'estimer log(*Objet*) et d'en déduire :

$$Objet = 10^{\log(Objet)}$$

La présente invention peut être utilisée dans n'importe quel procédé nécessitant une amélioration de la qualité de l'image. Elle s'applique entre autre au domaine de l'imagerie médicale (Radiographies à rayons X, scanner, IRM, etc...), ainsi que dans tous les autres types d'imageurs (rayons X, visible, infrarouge).
Les applications concrètes concernent par exemple :

- La suppression d'une perturbation, différente du bruit, qui dégrade la visibilité et qui peut entrainer un mauvais diagnostic dans le cas de l'imagerie médicale, comme l'illustre la figure 1. L'invention permet avantageusement de laisser le bruit dans l'image numérique, ce qui peut être recherché par certains praticiens en imagerie médicale ;
- La caractérisation d'objets à des fins techniques ou médicales (par exemple la taille d'une grosseur dans le corps du patient) ;
- Le débruitage : si le premier mode de réalisation est utilisé, il est possible d'obtenir une estimation de l'objet, du contenu et du bruit (en connaissant l'estimation de la variance de bruit $\sigma^2$). Il est alors possible de reconstruire le signal seulement avec les composantes de l'objet et du contenu. La même opération peut être effectuée sans objet, en estimant seulement le contenu et le bruit.

Le procédé selon l'invention est ainsi capable d'estimer correctement chacune des composantes des dictionnaires bien que ceux-ci comportent de nombreuses composantes. L'utilisation d'un procédé itératif permet d'estimer les composantes une à une en filtrant à chaque fois au mieux les autres composantes précédemment estimées.

**Revendications**

1. Procédé d'estimation paramétrique d'un objet à estimer dans une image numérique représentant au moins un contenu réel imagé et l'objet à estimer susceptible de gêner la visualisation du contenu réel imagé, comprenant au moins :

   a) une étape initiale comprenant la création d'un dictionnaire de composantes de contenu et la création d'un dictionnaire de composantes d'objet, les composantes de contenu (D) et les composantes d'objet ayant les mêmes dimensions que l'image numérique (y) ;
   b) une étape de détermination conjointe de l'amplitude de chacune des composantes de contenu du dictionnaire de composantes de contenu et des composantes d'objet du dictionnaire de composantes d'objet présentes dans l'image numérique ;
   c) une étape de détermination de la valeur d'au moins un paramètre caractérisant l'objet à estimer à partir de l'amplitude de chacune des composantes d'objet dans un vecteur d'estimation contenant les amplitudes de chaque composante, le paramètre étant sélectionné dans un ensemble comprenant la fréquence, la forme, la taille et l'emplacement de l'objet, et comprenant les sous-étapes de :

      - détermination d'un sous-ensemble de composantes d'objet de plus forte amplitude ;
      - détermination de la valeur dudit paramètre en fonction d'une combinaison linéaire des composantes d'objet dudit sous-ensemble ;

l'étape b) de détermination conjointe étant réalisée par détermination itérative d'un vecteur d'estimation (β) comprenant les différentes valeurs d'amplitude de chacune des composantes du dictionnaire de contenu et du dictionnaire d'objet présentes dans l'image, jusqu'à convergence du vecteur d'estimation (β) ;

l'étape b) de détermination conjointe comprenant la détermination itérative d'une estimation de la variance de bruit ($\sigma^2$), déterminée à partir du vecteur d'estimation (β) et d'une matrice N de corrélation du bruit présent dans l'image numérique, jusqu'à convergence de l'estimation de la variance de bruit ($\sigma^2$) ;

la variance de bruit ($\sigma^2$) étant définie par :

$$\sigma^2 = \frac{[\mathbf{y} - \mathrm{D}\boldsymbol{\beta}]^{\mathrm{H}} \mathrm{N}^{-1} [\mathbf{y} - \mathrm{D}\boldsymbol{\beta}] + \mathrm{a}}{\mathrm{M} + \mathrm{b}}$$

où N représente la matrice de corrélation du bruit, M représente le nombre de pixels de l'image, et a et b sont des paramètres déterminés en fonction de la nature du bruit.

2. Procédé d'estimation paramétrique selon l'une des revendications précédentes, la création du dictionnaire de contenu comprenant la génération d'un ensemble d'images de signaux sinusoïdaux bidimensionnels.

3. Procédé d'estimation paramétrique selon la revendication 1, la création du dictionnaire de contenu comprenant la génération d'un ensemble d'images représentatives de la fonction de transfert de modulation du capteur formant l'image numérique.

4. Procédé d'estimation paramétrique selon la revendication 1, la création du dictionnaire de contenu étant effectuée à partir d'un algorithme d'apprentissage automatique.

5. Procédé d'estimation paramétrique selon la revendication 4, l'algorithme d'apprentissage automatique étant un algorithme K-SVD.

6. Procédé d'estimation paramétrique selon l'une des revendications précédentes, la création d'un dictionnaire de composantes d'objet comprenant la génération d'un ensemble d'images ayant chacune une valeur différente du paramètre.

7. Procédé d'estimation paramétrique selon l'une des revendications précédentes, la convergence du vecteur d'estimation (β) étant considérée atteinte lorsque la norme du vecteur d'estimation (β) évolue en-dessous d'un seuil prédéterminé entre deux itérations successives.

8. Procédé d'estimation paramétrique selon l'une des revendications 1 à 6, la convergence du vecteur d'estimation (β) étant considérée atteinte au bout d'un nombre prédéterminé d'itérations.

9. Procédé d'estimation paramétrique selon l'une des revendications précédentes, comprenant, à la fin de chaque itération, une étape de modification des composantes du dictionnaire de composantes de contenu et/ou du dictionnaire de composantes d'objet pour minimiser une erreur de projection (ε) définie par :

$$\varepsilon = |\mathbf{y} - \mathrm{D}\boldsymbol{\beta}|^2,$$

où y est le vecteur représentant l'image numérique, et D la matrice représentant les composantes du dictionnaire à modifier.

10. Procédé d'estimation paramétrique selon l'une des revendications précédentes, la matrice N de corrélation du bruit étant déterminée par une connaissance a priori du détecteur d'acquisition de l'image numérique.

11. Procédé d'estimation paramétrique selon l'une des revendications précédentes, comprenant une étape d) de reconstitution de l'image de contenu par combinaison linéaire de toutes les composantes de contenu.

12. Procédé d'estimation paramétrique selon l'une des revendications précédentes, l'image numérique étant acquise par imagerie à rayons X.

**13.** Procédé de suppression d'un objet présent dans une image numérique représentant un contenu réel imagé, comprenant les étapes de :

- estimation de la valeur d'au moins un paramètre de l'objet et des amplitudes pour des composantes multiples déterminées conformément au procédé d'estimation paramétrique selon l'une des revendications précédentes ;
- estimation de l'objet à partir de la valeur du paramètre caractérisant l'objet et de son amplitude ;

soustraction pixel par pixel de l'objet estimé dans l'image numérique.

**Patentansprüche**

**1.** Verfahren zum Schätzen von Parametern eines in einem digitalen Bild zu schätzenden Objekts, das mindestens einen realen Bildinhalt darstellt und das zu schätzende Objekt die Visualisierung des realen Bildinhalts beeinträchtigen kann, mindestens umfassend:

a) einen anfänglichen Schritt, der die Erstellung eines Inhaltskomponenten-Lexikons und die Erstellung eines Objektkomponenten-Lexikons, wobei die Inhaltskomponenten (D)

und die Objektkomponenten
die gleichen Abmessungen wie das digitale Bild (y) aufweisen;

b) einen Schritt zur gemeinsamen Bestimmung der Amplitude jeder der Inhaltskomponenten des Inhaltskomponenten-Lexikons und der Objektkomponenten des Objektkomponenten-Lexikons, die im digitalen Bild vorhanden sind;
c) einen Schritt zur Bestimmung des Wertes mindestens eines Parameters, der das zu schätzende Objekt kennzeichnet, aus der Amplitude jeder der Objektkomponenten in einem Schätzvektor, der die Amplituden jeder Komponente enthält, wobei der Parameter aus einer Anordnung ausgewählt wird, welche die Frequenz, die Form, die Größe und die Stelle des Objekts umfasst, und die Teilschritte umfasst zur:

- Bestimmung einer Teilmenge von Objektkomponenten mit größerer Amplitude;
- Bestimmung des Wertes des Parameters in Abhängigkeit von einer Linearkombination der Objektkomponenten der Teilmenge;

den Schritt b) zur gemeinsamen Bestimmung, die durch iterative Bestimmung eines Schätzvektors ($\beta$) durchgeführt wird, der die verschiedenen Amplitudenwerte jeder der Komponenten des Inhaltslexikons und des Objektlexikons, die im Bild vorhanden sind, umfasst, bis zur Konvergenz des Schätzvektors ($\beta$); Schritt b) zur gemeinsamen Bestimmung, welche die iterative Bestimmung einer Schätzung der Rauschvarianz ($\sigma^2$) beinhaltet, die aus dem Schätzvektor ($\beta$) und einer Korrelationsmatrix N des im digitalen Bild vorhandenen Rauschens bestimmt wird, bis zur Konvergenz der Schätzung der Rauschvarianz ($\sigma^2$);
wobei die Rauschvarianz ($\sigma^2$) definiert ist durch:

$$\sigma^2 = \frac{[y - D\boldsymbol{\beta}]^H N^{-1} [y - D\boldsymbol{\beta}] + a}{M + b}$$

wobei N die Rauschkorrelationsmatrix darstellt, M die Anzahl an Pixeln des Bildes darstellt und a und b Parameter sind, die in Abhängigkeit von der Art des Rauschens bestimmt werden.

**2.** Verfahren zum Schätzen von Parametern nach einem der vorstehenden Ansprüche, wobei die Erstellung des Inhaltslexikons das Erzeugen einer Anordnung zweidimensionaler sinusförmiger Signalbilder umfasst.

**3.** Verfahren zum Schätzen von Parametern nach Anspruch 1, wobei die Erstellung des Inhaltslexikons das Erzeugen einer Anordnung von Bildern umfasst, die repräsentativ für die Modulationstransferfunktion des Sensors sind, der das digitale Bild bildet.

**4.** Verfahren zum Schätzen von Parametern nach Anspruch 1, wobei die Erstellung des Inhaltslexikons aus einem automatischen Lernalgorithmus erfolgt.

**5.** Verfahren zum Schätzen von Parametern nach Anspruch 4, wobei der automatische Lernalgorithmus ein K-SVD-Algorithmus ist.

**6.** Verfahren zum Schätzen von Parametern nach einem der vorstehenden Ansprüche, wobei die Erstellung eines Objektkomponenten-Lexikons das Erzeugen einer Anordnung von Bildern umfasst, die jeweils einen anderen Wert des Parameters aufweisen.

**7.** Verfahren zum Schätzen von Parametern nach einem der vorstehenden Ansprüche, wobei die Konvergenz des Schätzvektors (β) als erreicht gilt, wenn die Norm des Schätzvektors (β) zwischen zwei aufeinanderfolgenden Iterationen unter einen vorbestimmten Schwellenwert sinkt.

**8.** Verfahren zum Schätzen von Parametern nach einem der Ansprüche 1 bis 6, wobei die Konvergenz des Schätzvektors (β) nach einer vorbestimmten Anzahl von Iterationen als erreicht gilt.

**9.** Verfahren zum Schätzen von Parametern nach einem der vorstehenden Ansprüche, umfassend am Ende jeder Iteration einen Schritt zum Modifizieren der Komponenten des Inhaltskomponenten-Lexikons und/oder des Objektkomponenten-Lexikons, um einen Projektionsfehler ($\varepsilon$) zu minimieren, definiert durch:

$$\varepsilon = |\mathbf{y} - \mathrm{D}\boldsymbol{\beta}|^2,$$

wobei y der Vektor ist, der das digitale Bild darstellt, und D die Matrix ist, welche die zu modifizierenden Komponenten des Lexikons darstellt.

**10.** Verfahren zum Schätzen von Parametern nach einem der vorstehenden Ansprüche, wobei die Rauschkorrelationsmatrix N durch Vorwissen über den digitalen Bildaufnahmedetektor bestimmt wird.

**11.** Verfahren zum Schätzen von Parametern nach einem der vorstehenden Ansprüche, umfassend einen Schritt d) zur Wiederherstellung des Inhaltsbildes durch lineare Kombination aller Inhaltskomponenten.

**12.** Verfahren zum Schätzen von Parametern nach einem der vorstehenden Ansprüche, wobei das digitale Bild durch Röntgenbildgebung aufgenommen wird.

**13.** Verfahren zum Entfernen eines Objekts aus einem digitalen Bild, das einen realen Bildinhalt darstellt, umfassend die Schritte zur:

- Schätzung des Wertes mindestens eines Parameters des Objekts und der Amplituden mehrerer Komponenten, die nach dem Verfahren zum Schätzen von Parametern nach einem der vorstehenden Ansprüche bestimmt wurden;
- Schätzung des Objekts aus dem Wert des Parameters, der das Objekt kennzeichnet, und seiner Amplitude;

Pixelweisen Subtraktion des geschätzten Objekts im digitalen Bild.

**Claims**

**1.** Method for estimating parameters of an object to be estimated in a digital image representing at least one real imaged content, and the object to be estimated able to interfere with the visualisation of the real imaged content, comprising at least:

a) one initial step comprising the production of a dictionary of content components and the production of a dictionary of object components, the content components (D) and the object components having the same dimensions as the digital image (y);
b) one step of jointly establishing the magnitude of each of the content components of the dictionary of component contents and of object components of the dictionary of object components present in the digital image;
c) one step of establishing the value of at least one parameter characterising the object to be estimated from the magnitude of each of the object components in an estimation vector containing the magnitudes of each component, the parameter being selected from a set comprising the frequency, shape, size and location of

13

the object, and comprising the substeps of:

- establishing a subset of object components of greater magnitude;
- establishing the value of said parameter as a function of a linear combination of the object components of said subset;

the joint establishment step b) being carried out by iterative establishment of an estimation vector ($\beta$) comprising the different magnitude values of each of the components of the content dictionary and the object dictionary present in the image, until convergence of the estimation vector ($\beta$);

the joint establishment step b) comprising the iterative establishment of an estimation of the noise variance ($\sigma^2$), established from the estimation vector ($\beta$) and a correlation matrix N of the noise present in the digital image, until convergence of the estimation of the noise variance ($\sigma^2$);

the noise variance ($\sigma^2$) being defined by:

$$\sigma^2 = \frac{[\mathbf{y} - D\boldsymbol{\beta}]^H N^{-1}[\mathbf{y} - D\boldsymbol{\beta}] + a}{M + b}$$

where N represents the noise correlation matrix, M represents the number of pixels of the image, and a and b are parameters established as a function of the nature of the noise.

2. Parametric estimation method according to any one of the preceding claims, the production of the content dictionary comprising the generation of a set of two-dimensional sinusoidal signal images.

3. Parametric estimation method according to claim 1, the production of the content dictionary comprising the generation of a set of images representative of the modulation transfer function of the sensor forming the digital image.

4. Parametric estimation method according to claim 1, the production of the content dictionary being carried out from a machine learning algorithm.

5. Parametric estimation method according to claim 4, the machine learning algorithm being a K-SVD algorithm.

6. Parametric estimation method according to any one of the preceding claims, the production of a dictionary of object components comprising the generation of a set of images, each having a different value of the parameter.

7. Parametric estimation method according to any one of the preceding claims, the convergence of the estimation vector ($\beta$) being considered reached when the norm of the estimation vector ($\beta$) evolves below a pre-established threshold between two successive iterations.

8. Parametric estimation method according to any one of claims 1 to 6, the convergence of the estimation vector ($\beta$) being considered to be reached after a pre-established number of iterations.

9. Parametric estimation method according to any one of the preceding claims, comprising, at the end of each iteration, a step of modifying the components of the dictionary of content components and/or dictionary of object components to minimise a projection error ($\varepsilon$) defined by:

$$\varepsilon = |\mathbf{y} - D\boldsymbol{\beta}|^2,$$

where y is the vector representing the digital image, and D is the matrix representing the components of the dictionary to be modified.

10. Parametric estimation method according to any one of the preceding claims, the noise correlation matrix N being established by prior knowledge of the digital image acquisition detector.

11. Parametric estimation method according to any one of the preceding claims, comprising a step d) of reconstructing the content image by linear combination of all the content components.

12. Parametric estimation method according to any one of the preceding claims, the digital image being acquired by X-ray imaging.

13. Method for removing an object present in a digital image representing real-world image content, comprising the steps of:

- estimating the value of at least one parameter of the object and the amplitudes for multiple components established according to the parametric estimation method according to any one of the preceding claims;
- estimating the object from the value of the parameter characterising the object and its magnitude;

pixel-by-pixel subtraction of the estimated object in the digital image.

FIG.1

FIG.2

FIG.3

COMP_CONT_2

COMP_CONT_1 г_1

COMP_CONT_K

FIG.4A

COMP_CONT_2

COMP_CONT_1

COMP_CONT_K

FIG.4B

COMP_OBJ_1  COMP_OBJ_2  COMP_OBJ_3  COMP_OBJ_4

## FIG.5

## FIG.6

FIG.7

Taille du carré à estimer (en pixel)

FIG.8

FIG.9

**RÉFÉRENCES CITÉES DANS LA DESCRIPTION**

**Littérature non-brevet citée dans la description**

- **YARDIBI T. et al.** Source localization and sensing: A nonparametric Iterative Adaptive Approach based on weighted least squares. *Aerospace and Electronic Systems, IEEE Transactions*, 2010

- **TAN X. et al.** Sparse Learning via Iterative Minimization with application to MIMO Radar Imaging. *IEEE Transactions on Signal Processing*, March 2011, vol. 59 (3)
- **CHEN YANG**. *Artifact Suppressed Dictionary Learning for Low-Dose CT Image Processing*